# EUROPÄISCHE PATENTANMELDUNG

(11) **EP 2 865 470 A1**
(43) Veröffentlichungstag der Anmeldung: **29.04.2015**
(21) Anmeldenummer: 14183870.6
(22) Anmeldetag: 08.09.2014
(51) Int. Cl.: B23B 31/12

(54) **Bohrfutter**

(30) Priorität: 24.10.2013 DE 102013111730
(71) Anmelder: Röhm GmbH, 89567 Sontheim (DE)
(72) Erfinder: Schenk, Peter, 89168 Niederstotzingen (DE); Thiemann, Christian, 72525 Münsingen (DE); Wiedenmann, Rainer, 89542 Herbrechtingen (DE)
(74) Vertreter: Hentrich Patentanwälte PartG mbB

(57) **Zusammenfassung**

Die Erfindung betrifft ein Bohrfutter mit einem Futterkörper (3), an dem ein Gewindering (13) geführt ist, der zum Verstellen von in dem Futterkörper (3) geführten Spannbacken (4) über ein Außengewinde (14) im Eingriff mit den Spannbacken zugeordneten Zahnreihen (15) steht, sowie mit einer den Futterkörper (3) umgebenden und mit dem Gewindering (13) drehmomentübertragend koppelbaren Spannhülse (2). Der Futterkörper (3) ist mehrteilig aus einem eine Spindelaufnahme (9) aufweisenden Kopplungsteil (10) und aus einem Backenführungsteil (11) gebildet, in dem Führungsaufnahmen (5) zur Führung der Spannbacken (4) geneigt zur Futterachse (12) verlaufen.

## Beschreibung

Die Erfindung betrifft ein Bohrfutter mit einem Futterkörper, an dem ein Gewindering geführt ist, der zum Verstellen von in dem Futterkörper geführten Spannbacken über ein Außengewinde im Eingriff mit den Spannbacken zugeordneten Zahnreihen steht, sowie mit einer den Futterkörper umgebenden und mit dem Gewindering drehmomentübertragend koppelbaren Spannhülse.

Derartige Spannfutter mit einem ein Außengewinde aufweisenden Gewindering sind beispielsweise aus der EP 2 389 264 B1 bekannt. Bei der Herstellung der aus dem Stand der Technik bekannten Bohrfutter hat es sich jedoch als äußerst nachteilig erwiesen, dass der Futterkörper entlang seiner axialen Erstreckung Bereiche mit unterschiedlichen Außendurchmessern aufweist. Wird der aus Metall bestehende Futterkörper - wie üblich - aus einem spanend bearbeiteten Vollmaterial hergestellt, so entsteht hierdurch ein sehr großer Materialverlust, der die Herstellungskosten des Futterkörpers und damit des gesamten Bohrfutter erhöht.

Der vorliegenden Erfindung liegt daher die Aufgabe zugrunde, die oben genannten Nachteile zu reduzieren.

Diese Aufgabe wird nach der Erfindung bei einem Bohrfutter der eingangs genannten Art dadurch gelöst, dass der Futterkörper mehrteilig aus einem eine Spindelaufnahme aufweisenden Kopplungsteil und aus einem Backenführungsteil gebildet ist, in dem Führungsaufnahmen zur Führung der Spannbacken geneigt zur Futterachse verlaufen.

Durch die zweiteilig gebildeten Futterkörper können nun für die Herstellung des Kopplungsteils und des Backenführungsteils Ausgangsmaterialien mit unterschiedlichen Durchmessern verwendet werden, wodurch sich der Materialverlust bei einer spanenden Herstellung des Futterkörpers reduzieren lässt. Zudem können durch die Zweiteiligkeit des Futterkörpers auch unterschiedlich Materialien oder unterschiedliche Fertigungsweisen zum Einsatz kommen. So kann beispielsweise das hohen Belastungen ausgesetzte Kopplungsteil, dem die Spindelaufnahme zugeordnet ist, aus Metall hergestellt werden und das Backenführungsteil aus Kunststoff gefertigt werden, um die Kopflastigkeit einer mit dem Bohrfutter gekoppelten Bohrmaschine zu reduzieren.

Als besonders vorteilhaft hat es sich im Rahmen der Erfindung gezeigt, wenn den Führungsaufnahmen Führungsnuten und den als Flachbacken ausgeführten Spannbacken zu den Führungsnuten korrespondierende Führungsprofile zugeordnet sind. Durch die hierdurch entstehende Führung ist gewährleistet, dass die Spannbacken nicht nach innen kippen. Somit wird die Gefahr beseitigt, dass die Zahnreihen aus dem Eingriff mit dem an dem Gewindering ausgebildeten Außengewinde geraten, wodurch die Funktionsweise des Bohrfutters beeinträchtigt wäre. Durch die Führungsnuten und die hierzu korrespondierenden Führungsprofile ist zudem auch sichergestellt, dass sich die Spannbacken lediglich entlang der Führungsaufnahmen bewegen können, wodurch ein sicheres Einspannen eines Werkzeugschaftes zwischen den Spannbacken gewährleistet ist. Im Rahmen der Erfindung ist es jedoch auch vorgesehen, dass die Spannbacken als Rundbacken oder als trapezförmige Spannbacken ausgeführt sind.

Bewährt hat es sich zudem, wenn die einen im Wesentlichen rechteckigen Querschnitt aufweisenden Führungsprofile auf der von der Zahnreihe wegweisendenden Seite der Spannbacken angeordnet sind. Neben fertigungstechnischen Vorteilen wird hierdurch insbesondere die Gefahr reduziert, dass die Führungsprofile in Kontakt mit einem zu spannenden Werkzeugschaft geraten.

Als vorteilhaft hat es sich auch gezeigt, wenn der Durchmesser des Backenführungsteils im Bereich der die Spannbacken beherbergenden Führungsaufnahmen jeweils lokal vergrößert ist. Hierdurch kann zunächst Material eingespart werden, da der Außenumfang des Backenführungsteils lokal reduziert werden kann. Zudem ist dadurch auch gewährleistet, dass die Wandstärke des Backenführungsteils homogen ist, wodurch fertigungsinduzierte Spannungen reduziert werden. Weiterhin wird durch die lokale Vergrößerung des Durchmessers eine zusätzliche Führung der Spannhülse bereit gestellt.

Der Montageaufwand kann zudem reduziert werden, wenn das Backenführungsteil an der dem Kopplungsteil abgewandten Seite einen zylindrischen ersten Teilabschnitt aufweist, an den ein kegelstumpfförmiger zweiter Teilabschnitt angeformt ist und wenn dem Backenführungsteil an der dem Kopplungsteil zugewandten Seite ein zylindrischer dritter Teilabschnitt zugeordnet ist. Durch den zylindrischen ersten Teilabschnitt wird die Spannhülse im montierten Zustand abgestützt und geführt. In dem kegelstumpfförmigen zweiten Teilabschnitt sind die Führungsaufnahmen ausgebildet und der zylindrische dritte Teilabschnitt dient der Verbindung mit dem Kopplungsteil. An der Schulter, die an dem Übergang zwischen dem kegelstumpfförmigen zweiten Teilabschnitt und dem zylindrischen dritten Teilabschnitt gebildet ist, stützt sich im montierten Zustand der Gewindering ab. Zudem kann durch diese Ausgestaltung des Backenführungsteils erreicht werden, dass das Backenführungsteil eine homogene Wandstärke aufweist, wodurch fertigungsinduzierte Spannungen reduziert werden, die beispielsweise bei der Verwendung von Kunststoff während des Abkühlens auftreten können.

Als besonders vorteilhaft hat es sich zudem auch gezeigt, wenn dem Kopplungsteil zur Koppelung mit dem Backenführungsteil eine Sicherungsstruktur zugeordnet ist. Durch die Sicherungsstruktur, die beispielsweise durch eine Außenverzahnung gebildet sein kann, können das Kopplungsteil und Backenführungsteil sicher drehmomentübertragend miteinander verbunden werden. Im Rahmen der Erfindung ist es hierbei auch vorgesehen, dass das Backenführungsteil und das Kopplungsteil zusätzlich durch den Einsatz weiterer Sicherungsmittel, beispielsweise durch Verkleben oder Verschweißen zusätzlich gesichert werden. Ebenfalls ist es im Rahmen der Erfindung auch vorgesehen, dass das aus Kunststoff gebildete Backenführungsteil an das aus Metall gefertigte Kopplungsteil angespritzt wird. Hierbei hat es sich auch vorteilhaft erwiesen, wenn die Sicherungsstruktur durch einen Kragen axial begrenzt ist. Durch die axiale Begrenzung der Sicherungsstruktur wird die Lage des Backenführungsteils relativ zu dem Kopplungsteil definiert.

Als günstig hat es sich auch erwiesen, wenn dem Backenführungsteil eine Sicherungshülse mit einer innenumfangsseitig ausgebildeten Verzahnung, vorzugsweise einer Feinverzahnung zugeordnet ist, die zur axialen Sicherung der Spannhülse einen Ringbund aufweist. Durch den Einsatz der Sicherungshülse wird zudem das Backenführungsteil in dem zylindrischen ersten Teilabschnitt lokal verstärkt, der insbesondere bei der Verwendung eines aus Kunststoff gefertigten Backenführungsteils einen neuralgischen Bereich darstellt. Zudem können im Falle eines aus Kunststoff gefertigten Backenführungsteils durch die der Sicherungshülse zugeordnete Verzahnung, die sich in das Backenführungsteil eingräbt, Fertigungstoleranzen ausgeglichen werden, wodurch die Rundlaufeigenschaften des Bohrfutters verbessert werden. Der die Spannhülse axial sichernde Ringbund schützt zudem das Bohrfutter, sollte dieses im Betrieb unbeabsichtigter Weise auf eine Wand auftreffen.

Als besonders vorteilhaft hat es sich gezeigt, wenn ein mit dem Gewindering drehfest verbundener und an diesem axial verschiebbar gelagerter Spannring vorgesehen ist, der eine axial wirkende Sperrverzahnung zur Bildung eines Verzahnungseingriffes mit einer dem Futterkörper zugeordneten Gegenverzahnung aufweist. Hierdurch wird eine axial wirkende Verriegelungseinrichtung realisiert, wodurch die Verriegelung auch bei starken Vibrationen oder bei einer hohen Dynamik immer sicher geschlossen bleibt.

Bewährt hat es sich weiterhin, wenn die Gegenverzahnung an einem dem Kopplungsglied zugeordneten Verzahnungsring ausgebildet ist. So kann der Verzahnungsring einfach auf das Kopplungsglied aufgepresst werden und bildet dadurch gleichzeitig eine axiale Sicherung für den mit dem Gewindering drehfest gekoppelten Sperrring.

Als vorteilhaft hat es sich auch erwiesen, wenn dem über ein elastisches Rückstellelement an dem Gewindering gelagerten Sperrring mindestens eine Steuernocke zugeordnet ist, der zur axialen Verstellung des Sperrringes durch eine an einer der Spannhülsen zugeordneten Abschlussscheibe ausgebildeten Steuerkurve beaufschlagbar ist. Somit kann durch ein Verdrehen der Spannhülse der an dem Gewindering gelagerte Sperrring über die Steuerkurve axial zwischen einer Bohrkonfiguration, in der der Verzahnungseingriff zwischen der Sperrverzahnung und der Gegenverzahnung geschlossen ist, und einer Spannkonfiguration verstellt werden, in der der Sperrring axial gegen das elastische Rückstellelement verstellt wird und dadurch der Verzahnungseingriff zwischen der Sperrverzahnung und der Gegenverzahnung aufgehoben ist. In der Spannkonfiguration ist also eine Relativdrehung zwischen dem Gewindering und dem Futterkörper möglich, wodurch die in dem Futterkörper geführten Spannbacken axial verstellt werden. In der Bohrkonfiguration, in der die dem Sperrring zugeordnete Sperrverzahnung im Eingriff mit der Gegenverzahnung steht, die an dem Verzahnungsring ausgebildet ist, ist der Gewindering nun mit dem Futterkörper drehfest verbunden, wodurch eine Relativdrehung zwischen dem Gewindering und dem Futterkörper ausgeschlossen ist, die eine Lockerung der Spannbacken zur Folge hätte. Durch das Rückstellelement wirkt auf den Sperrring stets eine in Richtung der Gegenverzahnung gerichtete Kraft, wodurch die Funktionssicherheit des erfindungsgemäßen Bohrfutters erhöht wird. Die Abschlussscheibe ist dabei durch eine geeignete Sicherungsgeometire mit der Spannhülse drehfest und axial unverschiebbar gekoppelt.

In diesem Zusammenhang hat es sich auch als besonders günstig gezeigt, wenn die in der Abschlussscheibe ausgebildete mindestens eine Steuerkurve durch mindestens einen die Bohrkonfiguration und/oder die Spannkonfiguration definierenden Rastsitz begrenzt ist. In den Rastsitz kann nun die dem Sperrring zugeordnete Steuernocke eingreifen, wodurch der Sperrring jeweils wohldefinierte Endlagen aufweist.

Um ein möglichst kompaktes Bohrfutter zu erzielen, hat es sich zudem bewährt, wenn die Neigung der Spannbacken bezogen auf die Futterachse einem Bereich entstammt, der bevorzugt zwischen 15° und 25° liegt und der besonders bevorzugt bei 20° liegt. Durch das hierdurch entstehende Kurzbohrfutter kann insbesondere die Kopflastigkeit einer mit dem Bohrfutter verbundenen Bohrmaschine merklich reduziert werden.

Als günstig hat es sich auch gezeigt, wenn dem Kopplungsteil eine erste Sicherungsnut zugeordnet ist zur Sicherung des Verzahnungsringes. Hierdurch kann durch den Einsatz eines ersten Sprengringes die axiale Lage des Verzahnungsringes festgelegt werden. In diesem Zusammenhang hat es sich weiterhin auch als vorteilhaft erwiesen, wenn dem Gewindering eine zweite Sicherungsnut zugeordnet ist zur Sicherung der Abschlussscheibe. In die zweite Sicherungsnut kann nun beispielsweise einfach ein zweiter Sprengring eingesetzt werden, der die axiale Lage der Abschlussscheibe an dem Gewindering sichert.

Als besonders vorteilhaft hat es sich im Rahmen der Erfindung auch erwiesen, wenn das Kopplungsteil aus einem ersten Material und das Backenführungsteil aus einem zweiten Material gebildet ist, und wenn das erste Material und zweite Material unterschiedlich sind. Insbesondere durch die Ausführung des Backenführungsteils aus einem Kunststoff oder aus einem faserverstärkten Kunststoff kann die Kopflastigkeit des erfindungsgemäßen Bohrfutters deutlich reduziert werden. Zudem können durch die Verwendung der vorgenannten Materialien im Backenführungsteil unterschiedliche Formen der Führungsaufnahmen realisiert werden, da diese nicht zwingend einen runden Querschnitt aufweisen müssen. Gleichwohl kann bei einem aus einem Kunststoff gefertigten Backenführungsteil das Kopplungsteil aus einem Metall hergestellt werden, um den Bereich zu verstärken, der erhöhten Belastungen ausgesetzt ist. Im Rahmen der Erfindung ist es jedoch auch ein metallenes Backenführungsteil vorgesehen, das beispielsweise durch ein Metallspritzgussverfahren hergestellt werden kann.

Für den Einsatz bei Bohrmaschinen aus einer hohen Leistungsklasse hat es sich auch als vorteilhaft erwiesen, wenn die an dem Sperrring ausgebildete Sperrverzahnung und die dem Futterkörper zugeordnete und zu der Sperrverzahnung korrespondierende Gegenverzahnung aus einer Vielzahl von jeweils eine Verriegelungsflanke und eine Nachspannflanke aufweisenden Sperrzähnen gebildet ist. Durch eine geeignete Wahl der Steigungen der Verriegelungsflanken und der Nachspannflanken können die zum Nachspannen und Notöffnen benötigten Kräfte eingestellt werden. Je steiler die Steigung der Verriegelungsflanke ist desto größer ist der zum Lösen benötigte Kraftaufwand. In diesem Zusammenhang hat es sich als vorteilhaft erwiesen, wenn die Steigung der Verriegelungsflanke des zwischen der Sperrverzahnung und der Gegenverzahnung gebildeten Verzahnungseingriffes größer oder gleich der Steigung der Nachspannflanke ist. Somit ist ein Nachspannen des Bohrfutters stets möglich.

Als vorteilhaft hat es sich auch erwiesen, wenn die Steigung der Verriegelungsflanke größer oder gleich 45°, bevorzugt größer als 60° und besonders bevorzugt größer als 80° ist. Zwar wird mit größer werdender Steigung der Verriegelungsflanke ein höherer Kraftaufwand notwendig, um eine Notöffnung des erfindungsgemäßen Bohrfutters in der Bohrkonfiguration zu ermöglichen, jedoch können mit größer werdender Steigung auch höhere Drehmomente der verwendeten Bohrmaschine übertragen werden.

Um möglichst große Drehmomente übertragen zu können, hat es sich auch als vorteilhaft erwiesen, wenn die Verriegelungsflanken der Sperrzähne parallel zu den Nachspannflanken orientiert sind. Durch die hierdurch entstehende Steigung von 90° lässt sich insbesondere gewährleisten, dass ein ungewolltes Entriegeln der Verriegelungseinrichtung ausgeschlossen ist.

Im Folgenden wird die Erfindung an einem in den Zeichnungen dargestellten Ausführungsbeispielen näher erläutert; es zeigen:
- Fig. 1: eine Seitenansicht einer ersten Ausführungsform des erfindungsgemäßen Bohrfutters,
- Fig. 2: eine Draufsicht auf das Bohrfutter mit geschlossenen Spannbacken,
- Fig. 3: einen Längsschnitt entlang des Schnittes III-III aus der Figur 2,
- Fig. 4: eine Explosionsdarstellung der ersten Ausführungsform,
- Fig. 5: eine weitere Explosionsdarstellung der ersten Ausführungsform,
- Fig. 6: eine teilgeschnittene Ansicht des Futterkörpers der ersten Ausführungsform,
- Fig. 7: eine Seitenansicht des Futterkörpers,
- Fig. 8: eine Schnittansicht entlang des Schnittes VIII - VIII aus der Figur 7,
- Fig. 9: eine perspektivische Ansicht des Futterkörpers,
- Fig. 10: eine teilgeschnittene Ansicht des erfindungsgemäßen Bohrfutters,
- Fig. 11: das Detail XI aus der Figur 10,
- Fig. 12: eine Teilansicht der ersten Ausführungsform,
- Fig. 13: das Detail XIII aus der Figur 12 in der Bohrkonfiguration,
- Fig. 14: eine teilgeschnittene Ansicht der ersten Ausführungsform in der Spannkonfiguration,
- Fig. 15: das Detail XV aus der Figur 14,
- Fig. 16: eine teilgeschnittene Ansicht des rückwärtigen Ende der ersten Ausführungsform,
- Fig. 17: ein Verzahnungseingriff mit dem Detail XVIII, und
- Fig. 18.1-4: das Detail XVIII aus der Figur 17 mit unterschiedlich gestalteten Verzahnungseingriffen.
- Fig. 19: eine Draufsicht auf eine weitere Ausführungsform mit trapezförmigen Spannbacken,
- Fig. 20: eine Seitenansicht des Bohrfutters aus Fig. 19
- Fig. 21: eine Seitenansicht des Futterkörpers mit trapezförmigen Spannbacken,
- Fig. 22: eine Schnittansicht entlang des Schnittes XXII-XXII aus der Figur 21, und
- Fig. 23: eine perspektivische Ansicht des Futterkörpers aus der Richtung XXIII aus Fig. 21.

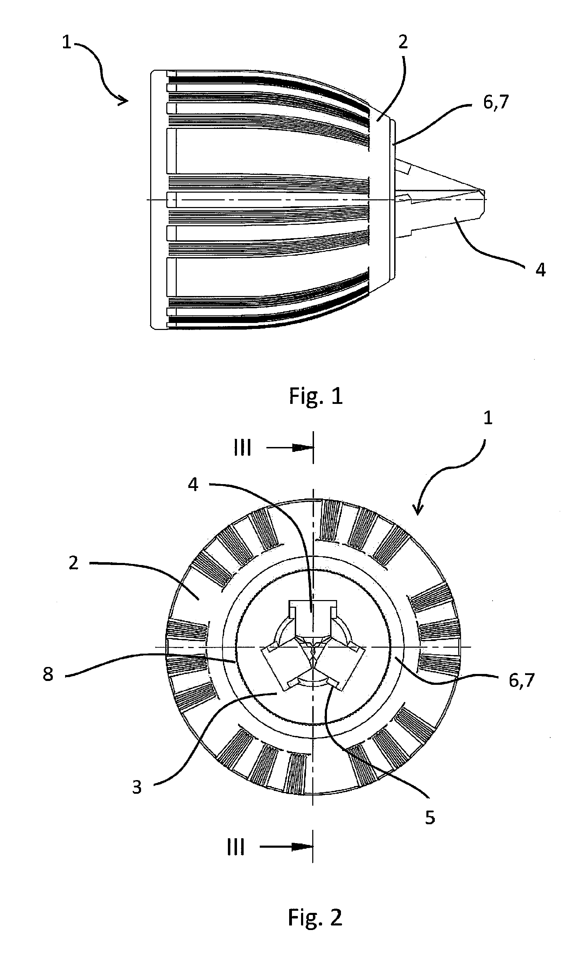

Figur 1 zeigt eine Seitenansicht einer ersten Ausführungsform des erfindungsgemäßen Bohrfutters 1. Neben einer Spannhülse 2, die einen in der Zeichnung nicht dargestellten Futterkörper 3 umgibt, sind aus der Figur 1 auch Spannbacken 4 ersichtlich, die in dem Futterkörper 3 in Führungsaufnahmen 5 geführt sind. Die Spannhülse 2 ist an der den Spannbacken 4 zugewandten Stirnseite durch eine einen Ringbund 6 aufweisende Sicherungshülse 7 axial gesichert.

Figur 2 zeigt eine Draufsicht auf das die Spannbacken 4 aufweisende Ende des Bohrfutters 1. Neben der Spannhülse 2 sind aus der in der Figur 2 dargestellten Draufsicht insbesondere auch der Futterkörper 3 und die Sicherungshülse 7 sichtbar, die mittels einer innenumfangsseitig ausgebildeten Verzahnung 8 auf den Futterkörper 3 aufgepresst ist und die Spannhülse 2 durch den Ringbund 6 axial sichert. Zudem wird durch die Sicherungshülse 7 der Futterkörper 3 in dem vorderen Teil verstärkt.

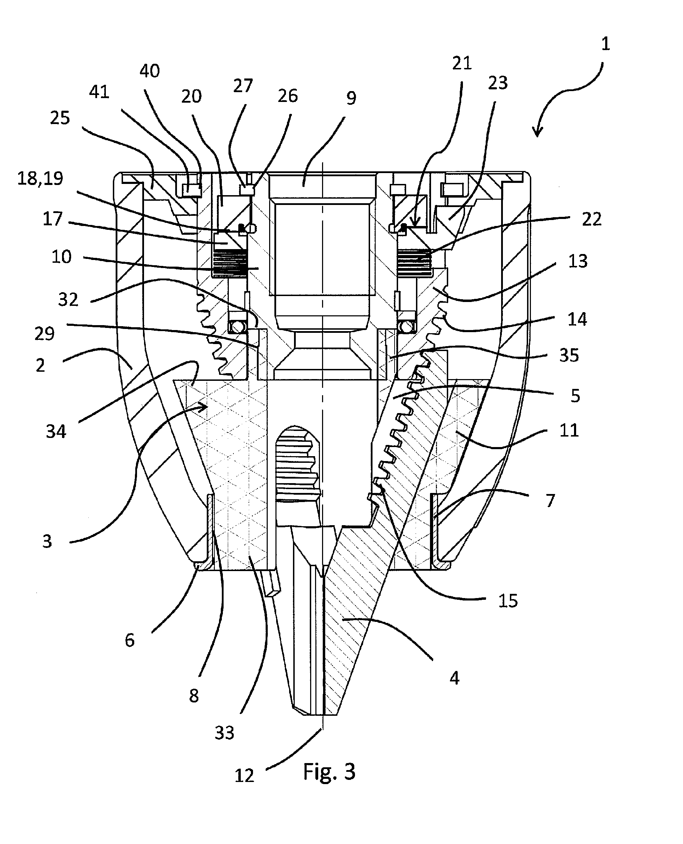

Figur 3 zeigt in einem Längsschnitt eine Schnittansicht der ersten Ausführungsform entlang des Schnittes III - III aus der Figur 2. Hierbei ist zu beachten, dass der Futterkörper 3 mehrteilig aus einem eine Spindelaufnahme 9 aufweisenden Kopplungsteil 10 und aus einem aus Kunststoff gefertigten Backenführungsteil 11 gebildet ist, in dem die Führungsaufnahmen 5 zur Führung der Spannbacken 4 geneigt zur Futterachse 12 verlaufen. Zur Verstellung der Spannbacken 4 ist in dem gezeigten Ausführungsbeispiel ein Gewindering 13 vorgesehen, der mit einem Außengewinde 14 im Eingriff mit Zahnreihen 15 steht, die den Spannbacken 4 zugeordnet sind. An dem Gewindering 13 ist ein mit diesem drehfest verbundene und axial verschiebbarer Sperrring 17 gelagert. Der Sperrring 17 weist eine axial wirkende Sperrverzahnung 18 zur Bildung eines Verzahnungseingriffes mit einer dem Futterkörper 3 zugeordneten Gegenverzahnung 19 auf. Die Gegenverzahnung 19 ist in dem gezeigten Ausführungsbeispiel an einem dem Kopplungsglied 10 zugeordneten Verzahnungsring 20 ausgebildet. Durch die Sperrverzahnung 18 und die hierzu korrespondierende Gegenverzahnung 19 ist eine Verriegelungseinrichtung 21 gegeben, mit der der Futterkörper 3 drehfest mit dem Gewindering 13 gekoppelt werden kann, um ein unbeabsichtigtes Lösen der Spannbacken 4 zu verhindern. Der an dem Gewindering 13 axial verschiebbar gelagerte Sperrring 17 ist über ein elastisches Rückstellelement 22 an dem Gewindering 13 abgestützt.

Zur Verstellung des Sperrringes 17 aus der Spannkonfiguration, in der die Sperrverzahnung 18 des Sperrringes 17 außerhalb des Eingriffes mit der dem Verzahnungsring 20 zugeordneten Gegenverzahnung 19 steht, in die Bohrkonfiguration, in der der Verzahnungseingriff zwischen der Sperrverzahnung 18 und der Gegenverzahnung 19 hergestellt ist, ist dem Sperrring 17 eine Steuernocke 23 zugeordnet, die durch eine Steuerkurve 24 beaufschlagbar ist, die an einer der Spannhülse 2 zugeordneten Abschlussscheibe 25 ausgebildet ist. Die in der Abschlussscheibe 25 ausgebildete Steuerkurve 24 ist in dem gezeigten Ausführungsbeispiel durch jeweils einen die Bohrkonfiguration und die Spannkonfiguration definierenden Rastsitz 28 begrenzt. Durch eine Drehung der Spannhülse 2 wird die Verriegelungseinrichtung 21 einfach zwischen der Bohrkonfiguration und der Spannkonfiguration verstellt. Die Neigung der Spannbacken 4 bezogen auf die Futterachse 12 liegt in dem gezeigten Ausführungsbeispiel bei 20°, was in einem sehr kompakten Bohrfutter resultiert. Zur axialen Sicherung des Verzahnungsringes 20 ist dem Kopplungsteil 10 eine erste Sicherungsnut 26 zugeordnet, in die ein erster Sprengring 27 eingesetzt ist, der die axiale Lage der Verzahnungsringes 20 fixiert. Die Abschlussscheibe 25 ist in dem gezeigten Ausführungsbeispiel drehfest mit der Spannhülse 2 verbunden und durch einen zweiten Sprengring 41 axial gesichert, der in eine zweite Sicherungsnut 40 eingesetzt ist, die in dem Gewindering 13 ausgebildet ist.

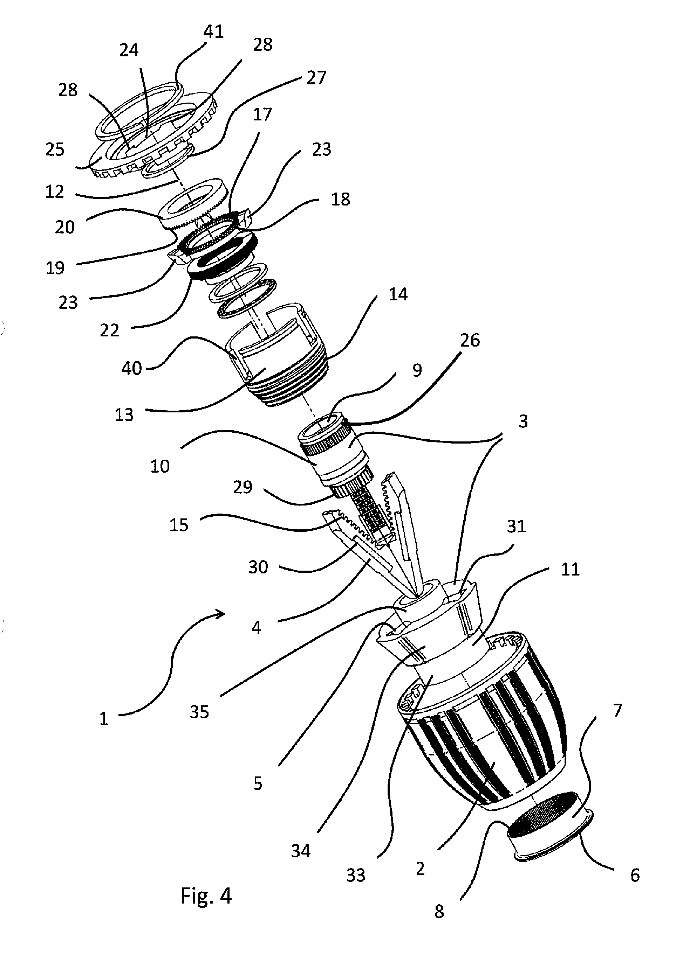

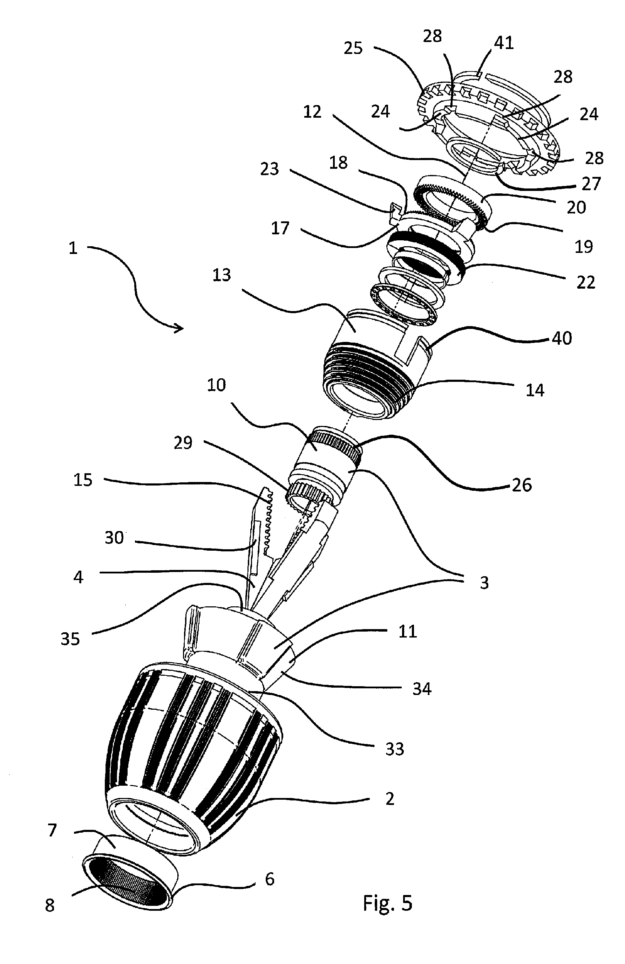

Figur 4 und Figur 5 zeigen aus unterschiedlichen Blickwinkeln jeweils eine Explosionsansicht der ersten Ausführungsform des erfindungsgemäßen Bohrfutters 1. Insbesondere aus der Figur 4 wird dabei auch der zweigeteilte Futterkörper 3 sichtbar, der aus dem aus Metall gefertigten Kopplungsteil 10 und dem aus Kunststoff gefertigten Backenführungsteil 11 gebildet ist. Dem Kopplungsteil 10 ist zur Kopplung mit dem Backenführungsteil 11 eine Sicherungsstruktur 29 zugeordnet, auf die das Backenführungsteil 11 bei der Montage aufgepresst und zusätzlich eingespritzt wird. Die in dem gezeigten Ausführungsbeispiel verwendeten Spannbacken 4 sind als Flachbacken ausgeführt und weisen an der von der Zahnreihe 15 wegweisenden Seite jeweils ein Führungsprofil 30 auf, das in dem gezeigten Ausführungsbeispiel einen rechteckigen Querschnitt aufweist und in Führungsnuten 31 eingesetzt werden kann, die in dem aus Kunststoff geformten Backenführungsteil 11 im Bereich der Führungsaufnahmen 5 ausgebildet sind.

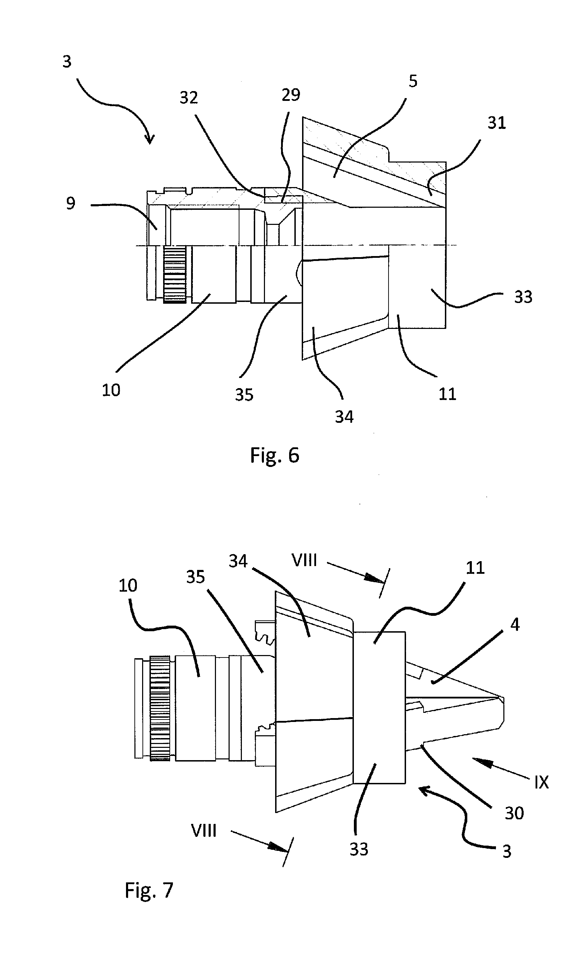

Figur 6 zeigt in einer teilgeschnittenen Ansicht den aus dem Kopplungsteil 10 und aus dem Backenführungsteil 11 gebildeten Futterkörper 3 der ersten Ausführungsform des erfindungsgemäßen Bohrfutters 1. Zu sehen ist in der in der Figur 5 dargestellten Ansicht, dass die Sicherungsstruktur 29, die an dem Kopplungsteil 10 ausgebildet ist, durch einen Kragen 32 axial begrenzt ist. Hierdurch wird beim Zusammenfügen des Futterkörpers 3 eine definierte Passung gewährleistet. Weiterhin sind aus der Figur 6 auch die geneigt zur Futterachse 12 verlaufenden Führungsaufnahmen 5 ersichtlich, die zur Führung der Spannbacken 4 vorgesehen sind und die Führungsnuten 31 aufweisen, in die die an den Spannbacken ausgebildeten Führungsprofile 30 eingesetzt werden können. Wie insbesondere auch aus der Figur 7 ersichtlich ist, wird hierdurch eine sichere Führung der Spannbacken gewährleistet. Zudem wird aus der Figur 6 der dreiteilige Aufbau des Backenführungsteils 11 deutlich. An dem dem Kopplungsteil 10 abgewandten Ende weist das Backenführungsteil 11 einen zylindrischen ersten Teilabschnitt 33 auf, an den ein kegelstumpfförmiger zweiter Teilabschnitt 34 angeformt ist, in dem die Führungsaufnahmen der Spannbacken ausgebildet sind. An dem dem Kopplungsteil 10 zugewandten Ende des Backenführungsteils 11 ist ein zylindrischer dritter Teilabschnitt 35 ausgebildet, der zur Kopplung des Backenführungsteils 11 mit dem Kopplungsteil 10 dient.

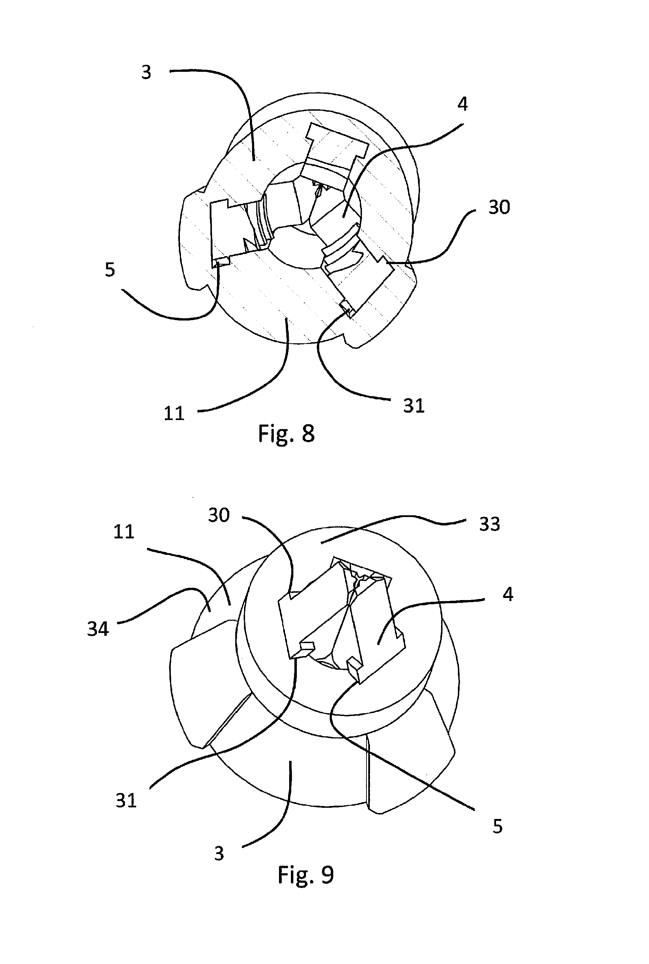

Figur 8 zeigt einen Querschnitt entlang des Schnittes VIII - VIII aus der Figur 7. Hierbei werden noch einmal die in den Führungsaufnahmen 5 ausgebildeten Führungsnuten 31 ersichtlich, die als Führung für die Führungsprofile 30 der Spannbacken 4 dienen. Durch die Führungsnuten 31 und die hierzu korrespondierenden Führungsprofile 30 ist ein Kippen der Spannbacken 4 nach innen oder nach außen effektiv verhindert.

Aus der Figur 9 ist zudem ersichtlich, dass der Durchmesser des kegelstumpfförmigen zweiten Teilabschnitts 34 im Bereich der die Spannbacken 4 beherbergenden Führungsaufnahmen 5 jeweils lokal vergrößert ist. Hierdurch wird insbesondere erreicht, dass die Wandstärke des Backenführungsteils 11 homogen bleibt, wodurch herstellungsinduzierte Spannungen, die häufig beim Abkühlen von Kunststoff entstehen, vermieden werden.

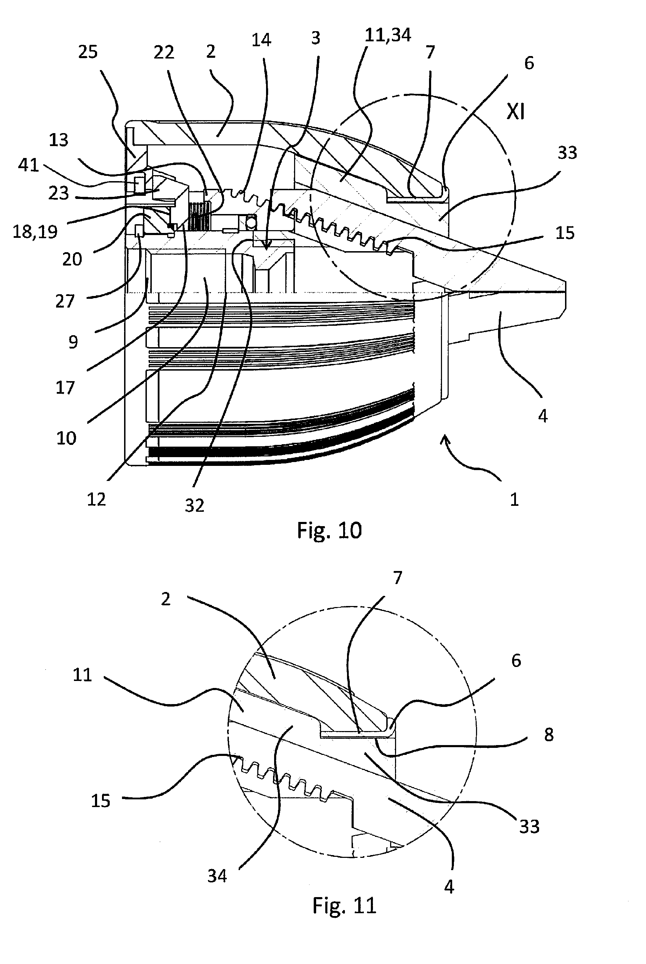

Figur 10 zeigt eine teilgeschnittene Ansicht der ersten Ausführungsform des erfindungsgemäßen Bohrfutters 1 in der Bohrkonfiguration. Die Sperrverzahnung 18 des Sperrringes 17 steht dabei im Verzahnungseingriff mit der Gegenverzahnung 19, die dem Futterkörper 3 zugeordnet ist. An dem der Abschlussscheibe abgewandten Ende der Spannhülse 2 ist die Sicherungshülse 7 angebracht, die - wie insbesondere dem in der Figur 11 dargestellten Detail XI entnommen werden kann - mit der innenumfangsseitig ausgebildeten Verzahnung 8 auf den zylindrischen ersten Teilabschnitt 33 des Backenführungsteils 11 aufgepresst ist und diesen lokal verstärkt. Zudem ist dem Detail XI auch zu entnehmen, dass die Spannhülse 2 durch den Ringbund 6, der der Sicherungshülse 7 zugeordnet ist, axial gesichert ist.

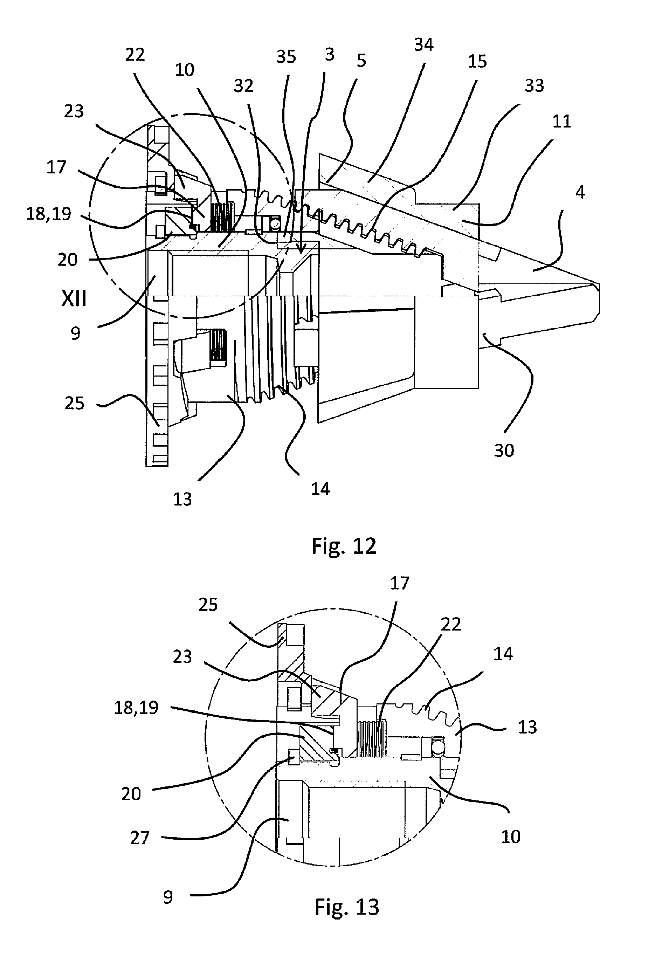

Der Figur 12 und dem in der Figur 13 dargestellten Detail XIII ist zu entnehmen, dass in der Bohrkonfiguration, die in der Zeichnung dargestellt ist, der Verzahnungseingriff zwischen der Sperrverzahnung 18 und der korrespondierenden Gegenverzahnung 19 hergestellt ist und die Steuernocke 23 in den die Bohrkonfiguration definierenden Rastsitz 28 eingerückt ist.

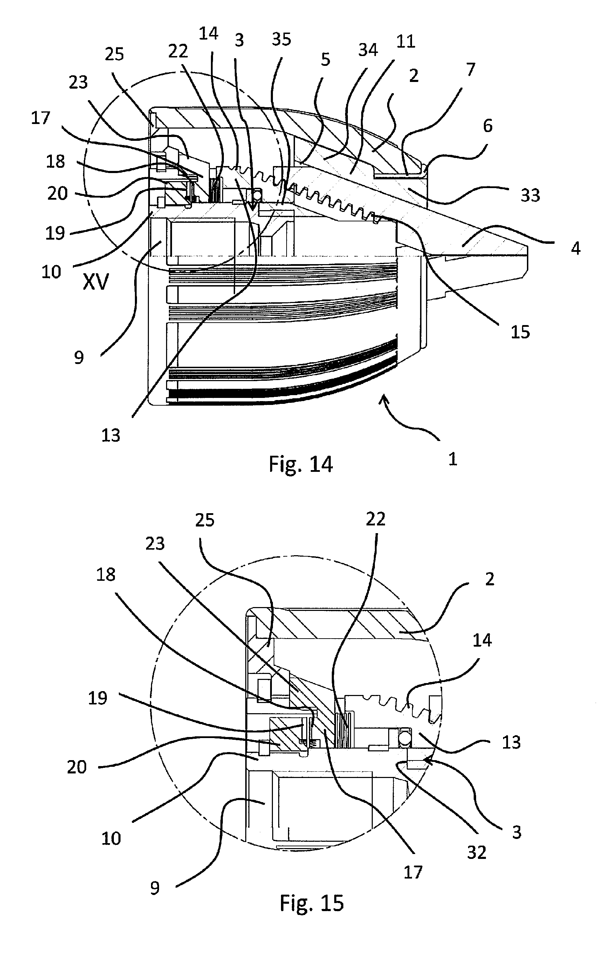

In der Spannkonfiguration, die in der Figur 14 dargestellt ist, ist - wie insbesondere dem in der Figur 15 dargestellten Detail XV zu entnehmen ist - der Verzahnungseingriff zwischen der Sperrverzahnung 18 und der dem Futterkörper 3 zugeordneten Gegenverzahnung 19 aufgehoben. Der Sperrring 17 ist entlang des Gewinderinges 13 durch die an der Abschlussscheibe 25 ausgebildete Steuerkurve 24 entgegen dem elastischen Rückstellelement 22 in Richtung der Spannbacken verstellt. Die Steuernocke 23 ist dabei in den die Spannkonfiguration definierenden Rastsitz 28 eingerückt.

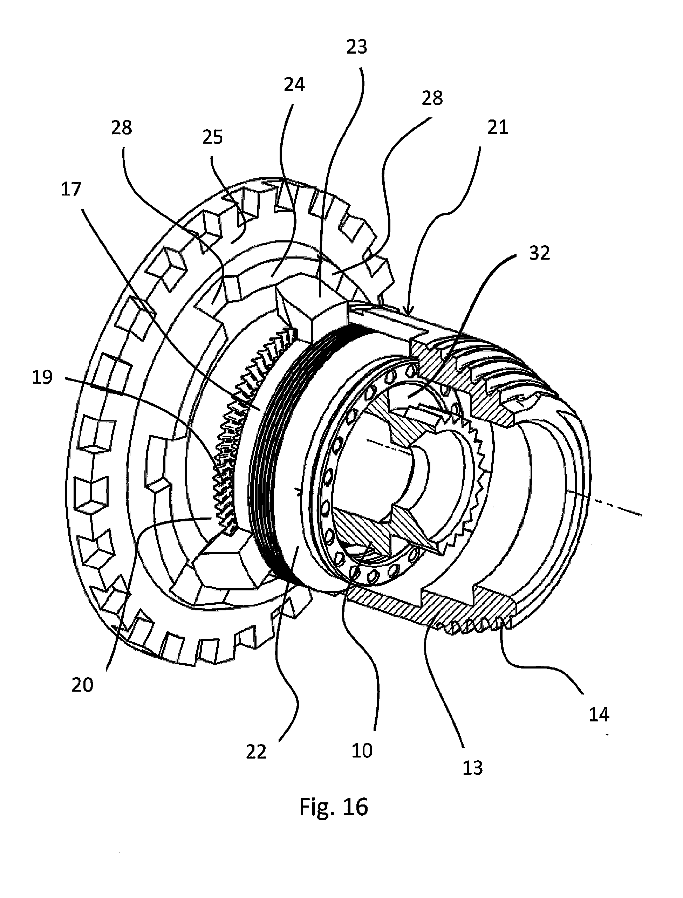

Figur 16 zeigt in einer teilgeschnittenen Ansicht wesentliche Teile der Verriegelungseinrichtung 21. Insbesondere wird auf die Gestaltung der in der Abschlussscheibe 25 ausgebildeten Rastsitze 28, in die die Steuernocke 23 in der Bohrkonfiguration bzw. in der Spannkonfiguration eingerückt ist, und der durch die Rastsitze 28 begrenzten Steuerkurven 24 aufmerksam gemacht.

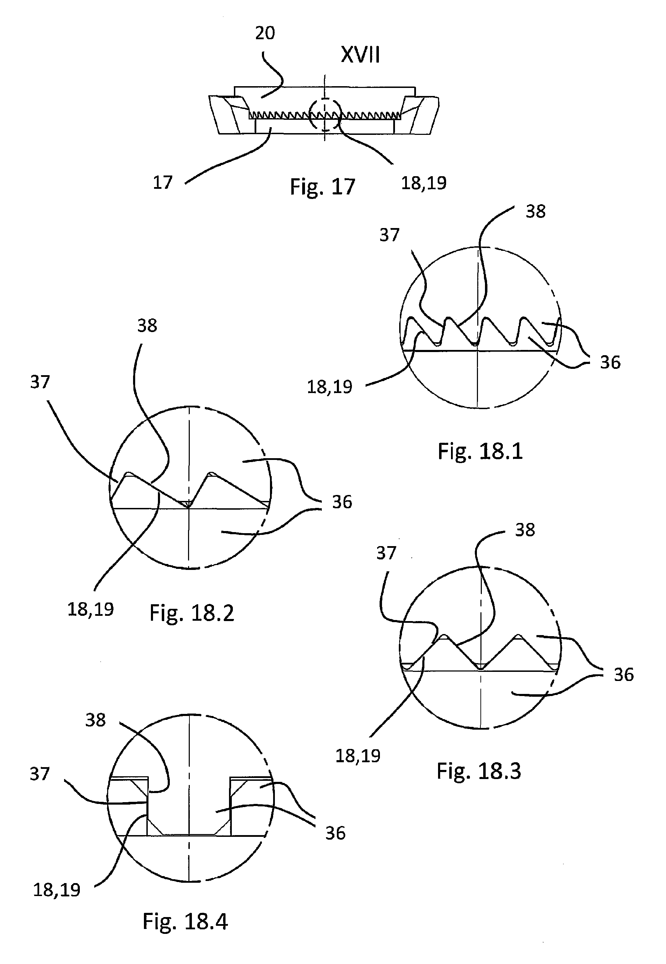

In der Figur 17 ist der Sperrring 17 gezeigt, der mit der Sperrverzahnung 18 im Eingriff mit der dem Verzahnungsring 20 Futterkörper 3 zugeordneten Gegenverzahnung 19 steht. Die Figuren 18.1-18.4 zeigen mit dem Detail XVIII aus der Figur 17 unterschiedliche Formen von Sperrverzahnung 18 und korrespondierender Gegenverzahnung 19. Die in den Figuren 18.1-18.4 dargestellten Varianten der Sperrverzahnung 18 und der Gegenverzahnung 19 sind stets aus einer Vielzahl von Sperrzähnen 36 gebildet, die jeweils eine Verriegelungsflanke 37 und eine Nachspannflanke 38 aufweisen. Die Steigung der Verriegelungsflanke 37 ist den in den Figuren 18.1-18.4 stets gleich oder größer als die Steigung der Nachspannflanke 38, die in den Figuren 18.1-18.3 stets 45° beträgt. Die Steigung der Verriegelungsflanke 37 beträgt 80° in der Figur 18.1, 60° in der Figur 18.2 und 45° in der Figur 18.3. Je steiler die Steigung der Verriegelungsflanke 37 ist, desto mehr Kraftaufwand ist nötig, um ein Notöffnen der Verriegelungseinrichtung 21 zu gewährleisten. Durch die recht flache Steigung der Nachspannflanke 38 ist ein Nachspannen des Bohrfutter 1 in der Bohrkonfiguration mit nur einem geringen Kraftaufwand möglich. Bei dem in der Figur 18.4 dargestellten Sperrzähnen ist die Verriegelungsflanke 37 parallel zu der Nachspannflanke 38 und weisen eine Steigung von 90° auf. In diesem Fall ist weder ein Nachspannen noch ein Notöffnen des verriegelten Bohrfutter 1 möglich.

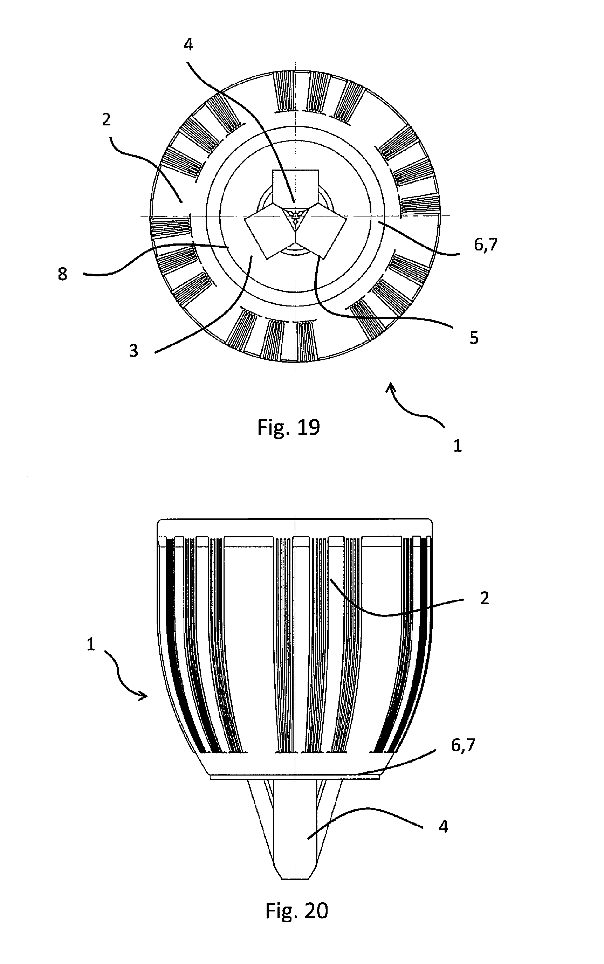

Figur 19 zeigt eine Seitenansicht einer weiteren Ausführungsform des erfindungsgemäßen Bohrfutters 1 mit trapezförmigen Spannbacken 4. Die Spannbacken 4 sind auch hier ebenfalls in den Führungsaufnahmen 5 geführt, die in dem Futterkörper 3 ausgebildet sind. In der Figur 20 ist die weitere Ausführungsform des Bohrfutters mit trapezförmigen Spannbacken 4 in einer Seitenansicht gezeigt. Insbesondere wird hierbei auch der die Spannhülse 2 axial sichernde Ringbund 6 der auf den Futterkörper 3 aufgepressten Sicherungshülse 7 erkennbar.

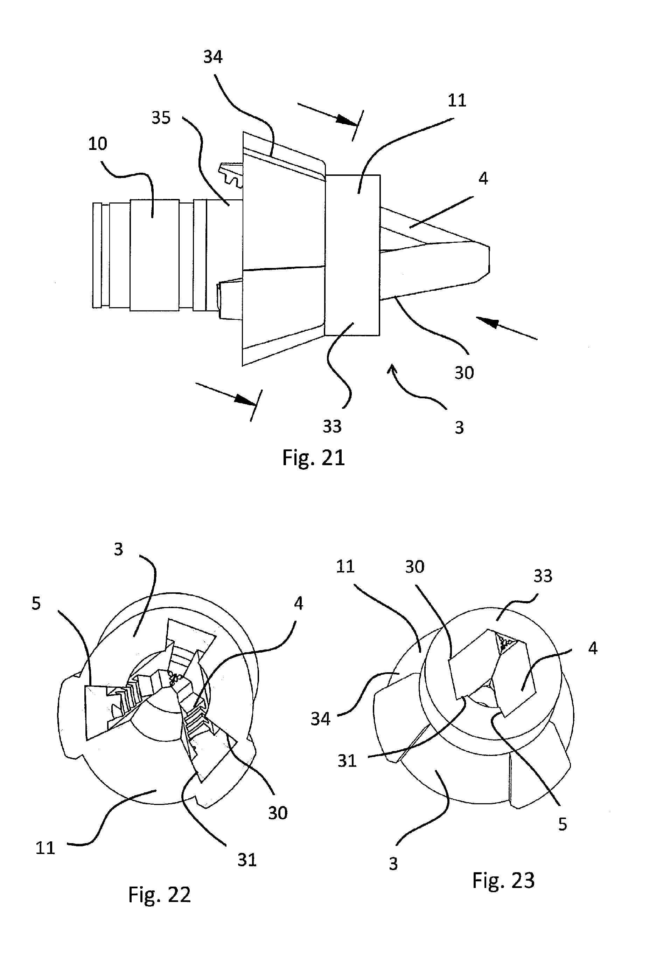

Figur 21 zeigt eine Seitenansicht des Futterkörpers 3 mit den trapezförmigen Spannbacken 4, die in dem Backenführungsteil 11 des Futterkörpers 3 geführt sind.

Aus der in der Figur 22 dargestellten Schnittansicht des Futterkörpers 3 entlang des Schnittes XXII-XXII aus der Figur 21 werden insbesondere der trapezförmige Querschnitt der Spannbacken 4 und der hierzu korrespondierende Querschnitt der in dem Backenführungsteil 11 ausgebildeten Führungsaufnahmen 5 ersichtlich. Durch den als Führungsprofil 30 dienenden, trapezförmigen Querschnitt der Spannbacken 4 und die hierzu korrespondierende Gestaltung der Führungsaufnahmen 5, die als Führungsnuten 31 wirken, wird insbesondere ein Kippen der Spannbacken 4 verhindert.

Wie zudem der in der Figur 23 dargestellten perspektivischen Ansicht auf den Futterkörper 3 entnommen werden kann, ist auch bei dieser Ausführungsform das Backenführungsteil 11 im Bereich der die trapezförmigen Spannbacken 4 beherbergenden Führungsaufnahmen 5-also in dem kegelstumpfförmigen zweiten Teilabschnitt 34 - lokal vergrößert.

Im Folgenden wird die Funktionsweise des erfindungsgemäßen Bohrfutters noch einmal erläutert.

In der Spannkonfiguration ist der Sperrring 17 axial gegen das elastische Rückstellelement 22 verstellt und die Sperrverzahnung 18 befindet sich nicht im Eingriff mit der Gegenverzahnung 19. Die Steuernocke 23 ist dabei in den die Spannkonfiguration definierenden Rastsitz 28 eingerückt. Betätigt der Nutzer den Antrieb einer mit dem Bohrfutter 1 verbundenen Bohrmaschine, so kommt es zu einer Relativdrehung zwischen dem Futterkörper 3 und dem Gewindering 13, wodurch -je nach Laufrichtung der Bohrmaschine - die Spannbacken 4 geschlossen oder geöffnet werden. Alternativ kann der Nutzer die Spannhülse manuell verdrehen, um die Spannbacken 4 zu verstellen. Dabei wird die Drehung der Spannhülse 2 über den Sperrring 17 und auf den Gewindering 13 übertragen. Kommen die Spannbacken 4 zur Anlage an einen zu spannenden Werkzeugschaft, so erhöht sich der Widerstand und die Steuernocke 23 wird aus dem die Spannstellung definierenden Rastsitz 28 ausgerückt und es kommt zu einer durch die Rastsitze 28 begrenzten Relativdrehung zwischen der Spannhülse 2 und dem Gewindering 13. Die Steuernocke 23 wird dabei entlang der Steuerkurve 24, die zwischen den Rastsitzen 28 ausgebildet ist, geführt und durch das elastische Rückstellelement 22 in die Bohrkonfiguration überführt, in der die Steuernocke 23 in den die Bohrkonfiguration definierenden Rastsitz 28 eingerückt ist. Dadurch befindet sich die Sperrverzahnung 18 nun im Eingriff mit der Gegenverzahnung 19. Wird der Antrieb weiter betätigt oder wird die Spannhülse 2 weiter in die Spannrichtung verdreht, so ist durch eine geeignete Wahl der Sperrverzahnung 18 und der Gegenverzahnung 19 ein Nachspannen möglich, das heißt, dass der Verzahnungseingriff durch ein Zurückweichen der Sperrverzahnung 18 gelöst wird und die Sperrverzahnung 18 über die Gegenverzahnung 19 rutscht. Beim Öffnen der Spannbacken 4 erfolgt die Verstellung in umgekehrter Reihenfolge.

Ausgehend von der Bohrkonfiguration, bei der die Sperrverzahnung 18 im Eingriff mit der Gegenverzahnung 19 steht, wird bei einer Drehung der Spannhülse 2 der Verzahnungseingriff zwischen der Sperrverzahnung 18 und der Gegenverzahnung 19 gelöst und der Sperrring 17 wird durch die Steuerkurve 24 am Gewindering 13 axial verstellt und rückt dann in den die Spannkonfiguration definierenden Rastsitz 28 ein. Nun können durch eine Betätigung eines mit dem Futterkörper 3 gekoppelten Antriebs einer Bohrmaschine, dessen Laufrichtung im Vergleich zum Spannvorgang verändert wurde, die Spannbacken 3 geöffnet werden. Alternativ kann die Relativdrehung zwischen dem Futterkörper und dem Gewindering auch durch ein manuelles Verdrehen der Spannhülse 2 erfolgen.

Sollte bei gespannten Spannbacken 4 ein manuelles Verdrehen der Spannhülse 2 zum Lösen des Verriegelungseingriffes aufgrund einer blockierten Verriegelungseinrichtung 21 nicht möglich sein, wie dies insbesondere im Schlagbohrbetrieb auftreten kann, so kann durch die geeignete Wahl der Steigung der Verriegelungsflanken 37 ein Notlösen durch den mit dem Futterkörper 3 gekoppelten Antrieb einer Bohrmaschine ermöglicht werden.

### Bezugszeichenliste

- 1: Bohrfutter
- 2: Spannhülse
- 3: Futterkörper
- 4: Spannbacken
- 5: Führungsaufnahmen
- 6: Ringbund
- 7: Sicherungshülse
- 8: Verzahnung
- 9: Spindelaufnahme
- 10: Kopplungsteil
- 11: Backenführungsteil
- 12: Futterachse
- 13: Gewindering
- 14: Außengewinde
- 15: Zahnreihe
- 17: Sperrring
- 18: Sperrverzahnung
- 19: Gegenverzahnung
- 20: Verzahnungsring
- 21: Verriegelungseinrichtung
- 22: elastisches Rückstellelement
- 23: Steuernocke
- 24: Steuerkurve
- 25: Abschlussscheibe
- 26: erste Sicherungsnut
- 27: erster Sprengring
- 28: Rastsitz
- 29: Sicherungsstruktur
- 30: Führungsprofil
- 31: Führungsnut
- 32: Kragen
- 33: zylindrischer erster Teilabschnitt
- 34: kegelstumpfförmiger zweiter Teilabschnitt
- 35: zylindrischer dritter Teilabschnitt
- 36: Sperrzahn
- 37: Verriegelungsflanke
- 38: Nachspannflanke
- 39: Innengewinde
- 40: zweite Sicherungsnut
- 41: zweiter Sprengring

## Patentansprüche

1. Bohrfutter mit einem Futterkörper (3), an dem ein Gewindering (13) geführt ist, der zum Verstellen von in dem Futterkörper (3) geführten Spannbacken (4) über ein Außengewinde (14) im Eingriff mit den Spannbacken zugeordneten Zahnreihen (15) steht, sowie mit einer den Futterkörper (3) umgebenden und mit dem Gewindering (13) drehmomentübertragend koppelbaren Spannhülse (2), **dadurch gekennzeichnet, dass** der Futterkörper (3) mehrteilig aus einem eine Spindelaufnahme (9) aufweisenden Kopplungsteil (10) und aus einem Backenführungsteil (11) gebildet ist, in dem Führungsaufnahmen (5) zur Führung der Spannbacken (4) geneigt zur Futterachse (12) verlaufen.

2. Bohrfutter nach Anspruch 1, **dadurch gekennzeichnet, dass** den Führungsaufnahmen (5) Führungsnuten (31) und den als Flachbacken ausgeführten Spannbacken (4) zu den Führungsnuten (31) korrespondierende Führungsprofile (30) zugeordnet sind.

3. Bohrfutter nach Anspruch 2, **dadurch gekennzeichnet, dass** die einen im Wesentlichen rechteckigen Querschnitt aufweisenden Führungsprofile (30) auf der von der Zahnreihe (15) wegweisenden Seite der Spannbacken (4) angeordnet sind.

4. Bohrfutter nach einem der Ansprüche 1 bis 3, **dadurch gekennzeichnet, dass** der Durchmesser des Backenführungsteils (11) im Bereich der die Spannbacken (4) beherbergenden Führungsaufnahmen (5) jeweils lokal vergrößert ist.

5. Bohrfutter nach einem der Ansprüche 1 bis 4, **dadurch gekennzeichnet, dass** das Backenführungsteil (11) an der dem Kopplungsteil (10) abgewandten Seite einen zylindrischen ersten Teilabschnitt (33) aufweist, an den ein kegelstumpfförmiger zweiter Teilabschnitt (34) angeformt ist, und dass dem Backenführungsteil (11) an der dem Kopplungsteil (10) zugewandten Seite ein zylindrischer dritter Teilabschnitt (35) zugeordnet ist.

6. Bohrfutter nach einem der Ansprüche 1 bis 5, **dadurch gekennzeichnet, dass** dem Kopplungsteil (10) zur Koppelung mit dem Backenführungsteil (11) eine Sicherungsstruktur (29) zugeordnet ist.

7. Bohrfutter nach Anspruch 6, **dadurch gekennzeichnet, dass** die Sicherungsstruktur (29) durch einen Kragen (32) axial begrenzt ist.

8. Bohrfutter nach einem der Ansprüche 1 bis 7, **dadurch gekennzeichnet, dass** dem Backenführungsteil (11) eine Sicherungshülse (7) mit einer innenumfangsseitig ausgebildeten Verzahnung (8), vorzugsweise einer Feinverzahnung zugeordnet ist, die zur axialen Sicherung der Spannhülse (2) einen Ringbund (6) aufweist.

9. Bohrfutter nach einem der Ansprüche 1 bis 8, **dadurch gekennzeichnet, dass** ein mit dem Gewindering (13) drehfest verbundener und an diesem axial verschiebbar gelagerter Sperrring (17) vorgesehen ist, der eine axial wirkende Sperrverzahnung (18) zur Bildung eines Verzahnungseingriffes mit einer dem Futterkörper (3) zugeordneten Gegenverzahnung (19) aufweist.

10. Bohrfutter nach Anspruch 9, **dadurch gekennzeichnet, dass** die Gegenverzahnung (19) an einem dem Kopplungsglied (10) zugeordneten Verzahnungsring (20) ausgebildet ist.

11. Bohrfutter nach Anspruch 9 oder 10, **dadurch gekennzeichnet, dass** dem über ein elastisches Rückstellelement (22) an dem Gewindering (13) gelagerten Sperrring (17) mindestens eine Steuernocke (23) zugeordnet ist, die zur axialen Verstellung des Sperrringes (17) durch eine an einer der Spannhülse (2) zugeordneten Abschlussscheibe (25) ausgebildeten Steuerkurve (24) beaufschlagbar ist.

12. Bohrfutter nach Anspruch 11, **dadurch gekennzeichnet, dass** die in der Abschlussscheibe (25) ausgebildete mindestens eine Steuerkurve (24) durch mindestens einen die Bohrkonfiguration und/oder die Spannkonfiguration definierenden Rastsitz (28) begrenzt ist.

13. Bohrfutter nach einem der Ansprüche 1 bis 12, **dadurch gekennzeichnet, dass** die Neigung der Spannbacken (4) bezogen auf die Futterachse (12) einem Bereich entstammt, der bevorzugt zwischen 15° und 25 liegt und der besonders bevorzugt bei 20° liegt.

14. Bohrfutter nach einem der Ansprüche 1 bis 13, **dadurch gekennzeichnet, dass** dem Kopplungsteil (10) eine erste Sicherungsnut (26) zugeordnet ist zur Sicherung des Verzahnungsrings (20).

15. Bohrfutter nach einem der Ansprüche 1 bis 14, **dadurch gekennzeichnet, dass** dem Gewindering (13) eine zweite Sicherungsnut (40) zugeordnet ist zur Sicherung der Abschlussscheibe (25).

16. Bohrfutter nach einem der Ansprüche 1 bis 15, **dadurch gekennzeichnet, dass** das Kopplungsteil (10) aus einem ersten Material und das Backenführungsteil (11) aus einem zweiten Material gebildet ist, und dass das erste Material und das zweite Material unterschiedlich sind.

17. Bohrfutter nach einem der Ansprüche 1 bis 16, **dadurch gekennzeichnet, dass** die an dem Sperrring (17) ausgebildete Sperrverzahnung (18) und die dem Futterkörper (3) zugeordnete und zu der Sperrverzahnung (18) korrespondierende Gegenverzahnung (19) aus einer Vielzahl von jeweils eine Verriegelungsflanke (37) und eine Nachspannflanke (38) aufweisenden Sperrzähnen (36) gebildet ist.

18. Bohrfutter nach Anspruch 17, **dadurch gekennzeichnet, dass** die Steigung der Verriegelungsflanke (37) des zwischen der Sperrverzahnung (18) und der Gegenverzahnung (19) gebildeten Verzahnungseingriffes größer oder gleich der Steigung der Nachspannflanke (38) ist.

19. Bohrfutter nach Anspruch 17 oder 18, **dadurch gekennzeichnet, dass** die Steigung der Verrieglungsflanke (37) größer als oder gleich 45°, bevorzugt größer als 60° und besonders bevorzugt größer ist als 80°ist.

20. Bohrfutter nach einem der Ansprüche 17 bis 19, **dadurch gekennzeichnet, dass** die Verriegelungsflanken (37) der Sperrzähne (36) parallel zu den Nachspannflanken (38) orientiert sind.
